(19) Europäisches Patentamt

European Patent Office

Office européen des brevets

(11) **EP 3 572 987 A1**

(12) **EUROPEAN PATENT APPLICATION**
published in accordance with Art. 153(4) EPC

(43) Date of publication:
27.11.2019 Bulletin 2019/48

(21) Application number: 18742308.2

(22) Date of filing: 04.01.2018

(51) Int Cl.:
*G06N 99/00* (2019.01)  *A47L 9/28* (2006.01)
*B25J 9/22* (2006.01)

(86) International application number:
PCT/JP2018/000013

(87) International publication number:
WO 2018/135301 (26.07.2018 Gazette 2018/30)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: 18.01.2017 JP 2017006825

(71) Applicant: Sony Corporation
Tokyo 108-0075 (JP)

(72) Inventors:
• **NAKAHASHI Ryo**
**Tokyo 108-0075 (JP)**
• **IDE Naoki**
**Tokyo 108-0075 (JP)**
• **MATSUNAGA Hideyuki**
**Tokyo 108-0075 (JP)**
• **FUKUI Akira**
**Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE AND INFORMATION PROCESSING METHOD**

(57)     The present disclosure relates to an information processing apparatus and information processing method that enables a user to easily teach an action with regard to action learning.

A touchscreen outputs unknown state element information that indicates an unknown state element, and teaching request information that requests teaching of an action corresponding to an ambient state, in a case where the ambient state includes the unknown state element. For example, it is possible to apply the present disclosure to a cleaner robot or the like that controls actions on the basis of an action model for finding a probability $P(a|s)$ that the cleaner robot performs an action a in a state s.

**FIG. 2**

**Description**

Technical Field

The present disclosure relates to an information processing apparatus and an information processing method. In particular, the present disclosure relates to an information processing apparatus and information processing method that enables a user to easily teach an action with regard to action learning.

Background Art

There have been reinforcement learning models for learning how to maximize a reward when there are an agent, a state, an action, and a reward (for example, see Non-Patent Literature 1).

Citation List

Non-Patent Literature

Non-Patent Literature 1: "Maximum Entropy Inverse Reinforcement Learning", Brian D. Ziebart, Andrew Maas, J. Andrew Bagnell, and Anind K. Dey, the Association for the Advancement of Artificial Intelligence (AAAI), 2008.7.13

Disclosure of Invention

Technical Problem

However, a method that enables a user to easily teach an action with regard to action learning has not been developed.
The present disclosure has been made in view of the above-described situations. The present disclosure enables a user to easily teach an action with regard to action learning.

Solution to Problem

An information processing apparatus according to an aspect of the present disclosure is an information processing apparatus including an output unit configured to output unknown state element information that indicates an unknown state element, and teaching request information that requests teaching of an action corresponding to an ambient state, in a case where the ambient state includes the unknown state element.
An information processing method according to an aspect of the present disclosure corresponds to the information processing apparatus according to the aspect of the present disclosure.
In an aspect of the present disclosure, unknown state element information that indicates an unknown state element, and teaching request information that requests teaching of an action corresponding to an ambient state are output, in a case where the ambient state includes the unknown state element.
Note that, it is possible to implement the information processing apparatus according to the aspect of the present disclosure, by causing a computer to execute a program.
In addition, the program to be executed by the computer to implement the information processing apparatus according to the aspect of the present disclosure can be provided by being transmitted through a transmission medium or by being recorded on a recording medium.

Advantageous Effects of Invention

According to an aspect of the present disclosure, it is possible for a user to easily teach an action with regard to action learning.
Note that the effects described here are not necessarily limited, and any effect that is desired in the present disclosure may be exhibited.

Brief Description of Drawings

[FIG. 1] FIG. 1 is a diagram for describing an overview of an embodiment of a cleaner robot.

[FIG. 2] FIG. 2 is a block diagram illustrating a configuration example of the cleaner robot illustrated in FIG. 1.

[FIG. 3] FIG. 3 is a diagram illustrating a first example of state screens.

[FIG. 4] FIG. 4 is a diagram illustrating a second example of state screens.

[FIG. 5] FIG. 5 is a flowchart for describing an initialization process of the cleaner robot.

[FIG. 6] FIG. 6 is a flowchart for describing a first example of an action control process of the cleaner robot in a normal mode.

[FIG. 7] FIG. 7 is a flowchart for describing an action control process of the cleaner robot in a proactive mode.

[FIG. 8] FIG. 8 is a flowchart for describing an action control process of the cleaner robot in a maintenance mode.

[FIG. 9] FIG. 9 is a flowchart for describing a second example of the action control process of the cleaner robot in the normal mode.

[FIG. 10] FIG. 10 is a diagram for describing another display method of a state screen.

[FIG. 11] FIG. 11 is a diagram illustrating an overview of an embodiment of a video game console serving as an information processing apparatus to which the present disclosure is applied.

[FIG. 12] FIG. 12 is a block diagram illustrating a configuration example of the embodiment of the video game console.

[FIG. 13] FIG. 13 is a diagram illustrating an overview of an embodiment of a support robot.

[FIG. 14] FIG. 14 is a block diagram illustrating a configuration example of hardware of a computer.

Mode(s) for Carrying Out the Invention

Next, modes (hereinafter, referred to as embodiments) for carrying out the present disclosure will be described. Note that, the description is given in the following order.

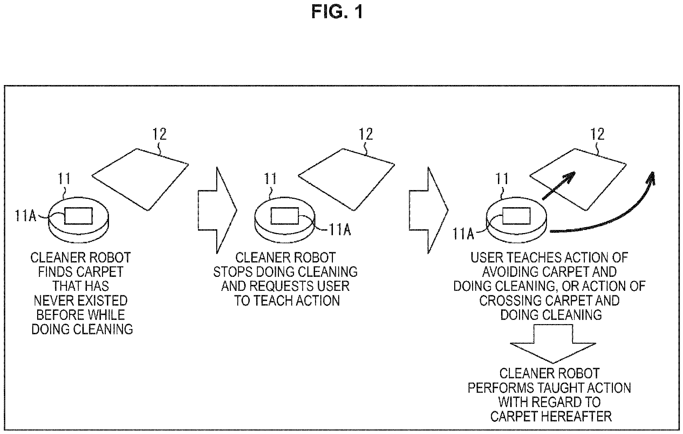

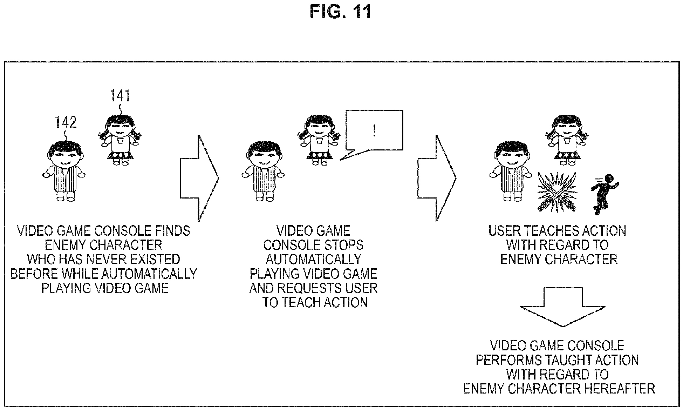

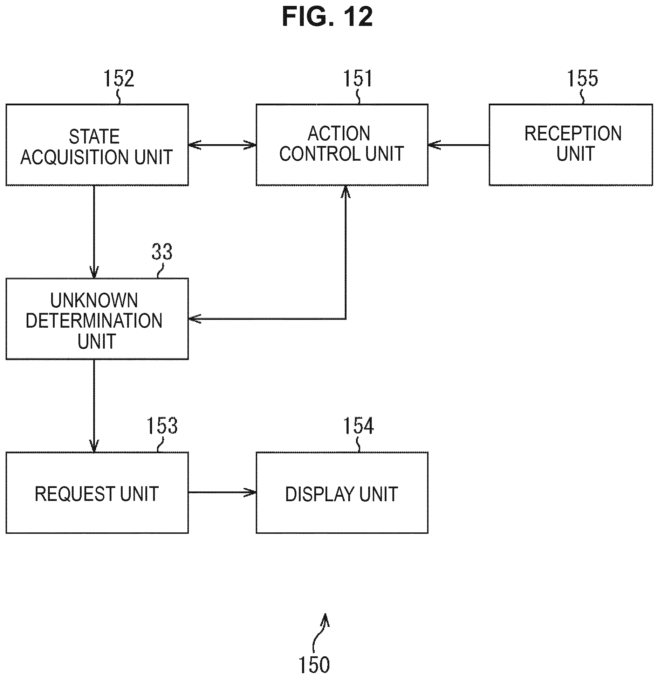

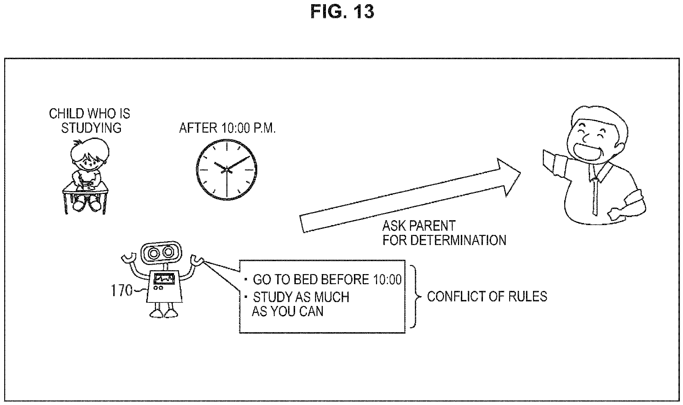

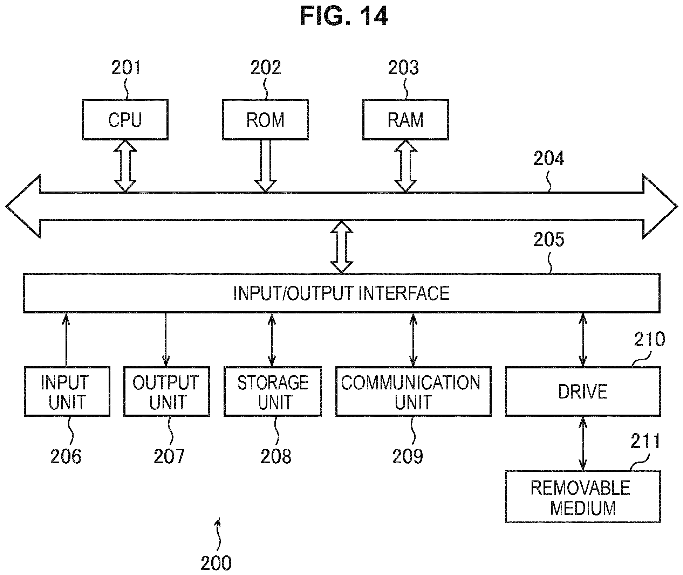

1. First embodiment: cleaner robot (FIG. 1 to FIG. 10)
2. Second embodiment: video game console (FIG. 11 and FIG. 12)
3. Third embodiment: support robot (FIG. 13)
4. Fourth embodiment: computer (FIG. 14)

<1. First embodiment>

(Overview of embodiment of cleaner robot)

FIG. 1 is a diagram for describing an overview of an embodiment of a cleaner robot that serves as an information processing apparatus to which the present disclosure is applied.

A cleaner robot 11 illustrated in FIG. 1 uses itself as an agent that is a target of action, detects an ambient state of the agent by using various kinds of sensors such as a camera, and causes the agent to perform an action such as cleaning on the basis of the state in accordance with an action model.

For example, the cleaner robot 11 stops doing cleaning when finding a carpet 12 that has never existed before around the cleaner robot 11 while doing cleaning. Next, the cleaner robot 11 causes a touchscreen 11A to display unknown state element information and teaching request information. The unknown state element information indicates the carpet 12 as an unknown state element, and the teaching request information requests a user to teach an action corresponding to the current ambient state.

The user sees the unknown state element information displayed on the touchscreen 11A, and recognizes that the unknown state element is the carpet 12. Next, the user operates the touchscreen 11A and teaches an action of avoiding the carpet 12 and doing cleaning, or an action of crossing the carpet 12 and doing cleaning.

The cleaner robot 11 learns the action model through generalization learning on the basis of the action taught by the user. Subsequently, the cleaner robot 11 performs the taught action with regard to the carpet 12 hereafter.

As described above, it is only necessary for the user to teach an action in the case where teaching request information is displayed. Therefore, it is easy for a user to teach action with regard to action learning even in the case of the user who is not good at operating devices.

(Configuration example of cleaner robot)

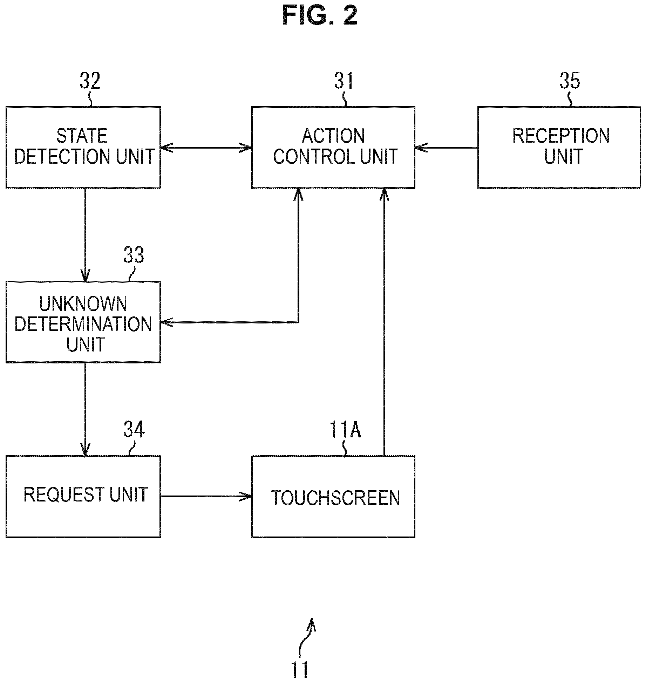

FIG. 2 is a block diagram illustrating a configuration example of the cleaner robot 11 illustrated in FIG. 1.

The cleaner robot 11 illustrated in FIG. 2 includes the touchscreen 11A, an action control unit 31, a state detection unit 32, an unknown determination unit 33, a request unit 34, and a reception unit 35.

The action control unit 31 in the cleaner robot 11 initializes an action model (action rule) for finding a probability $P(a|s)$ that the cleaner robot 11 performs an action a in a state s (adequacy of the action a of the cleaner robot 11 in the state s).

Specifically, the action control unit 31 requests the state detection unit 32 to detect an ambient state, and acquires state information that indicates the ambient state. The state information is supplied by the state detection unit 32 in response to the request. In addition, the action control unit 31 acquires a remote controller operation signal from the reception unit 35. The remote controller operation signal indicates operation of a remote controller (not illustrated) carried out by the user. On the basis of the remote controller operation signal, the action control unit 31 recognizes an action of the cleaner robot 11. The action is taught by the user and the action corresponds to the current ambient state. Next, the action control unit 31 initializes an action model through the generalization learning of the action model while using the state indicated by the current state information as the state s, and using the action of the cleaner robot 11 corresponding to the state as the action a. The action control unit 31 supplies the initialized action model to the unknown determination unit 33.

In addition, the action control unit 31 sets an action mode to a proactive mode, a normal mode, or a maintenance mode on the basis of a touch operation signal that indicates the operation carried out by the user on the touchscreen 11A. The touch operation signal is supplied by the touchscreen 11A.

In the case where the action mode is set to the proactive mode and the unknown determination unit 33 notifies that the current ambient state is a known state, the action control unit 31 selects an action having the highest probability that the ambient state becomes an unknown state after the action is performed, among actions whose probabilities $P(a|s)$ are more than or equal to a threshold in the current ambient state, on the basis of a state model (details thereof will be described later) and the action model. Next, the action control unit 31 performs control such that the cleaner robot 11 performs the selected action.

Note that, the known state is a state that does not include an unknown state element, and the unknown state is a state that includes an unknown state element. In addition, examples of actions of the cleaner robot 11 include an action of going straight and doing cleaning, an action of turning and doing cleaning, and the like.

In addition, the state model is a model for finding (a predictive value of) a probability $P(s'|s,a)$ that the state s changes to a state s' when the cleaner robot 11 performs the action a in the state s. Here, it is assumed that the state model is decided in advance. However, the state model may be learned on the basis of the state detected by the state detection unit 32 and the action performed by the action control unit 31.

Alternatively, in the case where the action mode is set to the normal mode and the unknown determination unit 33 notifies that the current ambient state is a known state, the action control unit 31 performs control such that the cleaner robot 11 performs an action having the highest probability $P(a|s)$ in the current ambient state on the basis of the action model.

Alternatively, in the case where the action mode is set to the maintenance mode and the unknown determination unit 33 notifies that the current ambient state is a known state, the action control unit 31 selects an action having the highest probability that the ambient state becomes a known state after the action is performed, among actions whose probabilities $P(a|s)$ are more than or equal to a threshold in the current ambient state, on the basis of the state model and the action model. Next, the action control unit 31 performs control such that the cleaner robot 11 performs the selected action.

Alternatively, in the case where the unknown determination unit 33 notifies that the current ambient state is not a known state regardless of the action mode, the action control unit 31 recognizes an action taught by the user on the basis of a touch operation signal supplied by the touchscreen 11A. Next, the action control unit 31 learns an action model through the generalization learning on the basis of the recognized action and the current ambient state, and supplies the unknown determination unit 33 with the action model obtained through the generalization learning. In addition, on the basis of the action model obtained through the generalization learning, the action control unit 31 performs control such that the cleaner robot 11 performs an action having the highest probability $P(a|s)$ in the current ambient state.

The state detection unit 32 includes various kinds of sensors such as a camera. The state detection unit 32 starts detection of an ambient state of the cleaner robot 11 in response to the request from the action control unit 31, and supplies state information of the detected state (such as an image captured by the state detection unit 32) to the action control unit 31. In addition, after the action learning model is initialized, the state detection unit 32 starts detection of an ambient state of the cleaner robot 11, and supplies the state information of the detected information to the unknown determination unit 33.

The unknown determination unit 33 determines whether the ambient state indicated by the state information is a known state or an unknown state, on the basis of the state information supplied by the state detection unit 32 and the action model supplied by the action control unit 31.

Specifically, the unknown determination unit 33 determines that the state s is an unknown state in the case where the state s indicates the ambient state and the following expression (1) or expression (2) is satisfied.

[Math. 1]

$$\max_{a \in A} P(a|s) < \mathrm{threshold} \qquad \cdots (1)$$

[Math. 2]

$$\sum_{a \in A} P(a|s) \ln P(a|s) > \mathrm{threshold} \qquad \cdots (2)$$

"threshold" represents a preset threshold, and A represents a set of actions a. With reference to the expression (1), the state s is determined to be an unknown state in the case where the maximum value of the probability P(a|s) is less than the threshold. In addition, with reference to the expression (2), the state s is determined to be an unknown state in the case where entropy of the probability P(a|s) is greater than the threshold.

Note that, the unknown determination unit 33 may determine that the state s is an unknown state in the case where a difference between the maximum value of the probability P(a|s) and the second-largest value of the probability P(a|s) is less than or equal to a threshold.

In addition, when the action model is a function using the state model, the unknown determination unit 33 determines that the state s is an unknown state in the case where the state s indicates the ambient state and the following expression (3) or expression (4) is satisfied.

[Math. 3]

$$\max_{s' \in S} P(s'|s, a) < \mathrm{threshold} \qquad \cdots (3)$$

[Math. 4]

$$\sum_{s' \in S} P(s'|s, a) \ln P(s'|s, a) > \mathrm{threshold} \qquad \cdots (4)$$

S represents a set of the states s. With reference to the expression (3), the state s is determined to be an unknown state in the case where the maximum value of the probability P(s'|s,a) is less than the threshold. In addition, with reference to the expression (4), the state s is determined to be an unknown state in the case where entropy of the probability P(s'|s,a) is greater than the threshold.

Note that, in this case, the unknown determination unit 33 may determine that the state s is an unknown state in the case where a difference between the maximum value of the probability P(s'|s,a) and the second-largest value of the probability P(s'|s,a) is less than or equal to a threshold.

The unknown determination unit 33 notifies the action control unit 31 of the determination result and the state information. In addition, the unknown determination unit 33 determines whether a state element is a known state element or an unknown state element on the basis of the action model supplied by the action control unit 31 for each of one or more state elements included in the ambient state indicated by the state information. Next, the unknown determination unit 33 supplies the state information and unknown state element specification information to the request unit 34. The unknown state element specification information specifies the unknown state element. Note that, in the case where there is no unknown state element, the unknown state element specification information is information that does not specify any state element.

The request unit 34 generates (updates) unknown state element information on the basis of the state information and the unknown state element specification information. In addition, the request unit 34 generates teaching request information in the case where the unknown state element specification information is information that specifies a certain state element as an unknown state element. Next, the request unit 34 generates a state screen including the unknown state element information, the teaching request information, and the like and supplies the state screen to the touchscreen 11A.

The reception unit 35 receives operation of the remote controller (not illustrated) carried out by the user, and supplies the action control unit 31 with a remote controller operation signal indicating the operation.

The touchscreen 11A (output unit) displays (outputs) the state screen supplied by the request unit 34. The touchscreen 11A receives operation of selecting an action mode from the user and supplies the action control unit 31 with a touch operation signal of the operation. In addition, the touchscreen 11A receives operation of teaching an action from the user and supplies the action control unit 31 with a touch operation signal of the operation.

(First example of state screens)

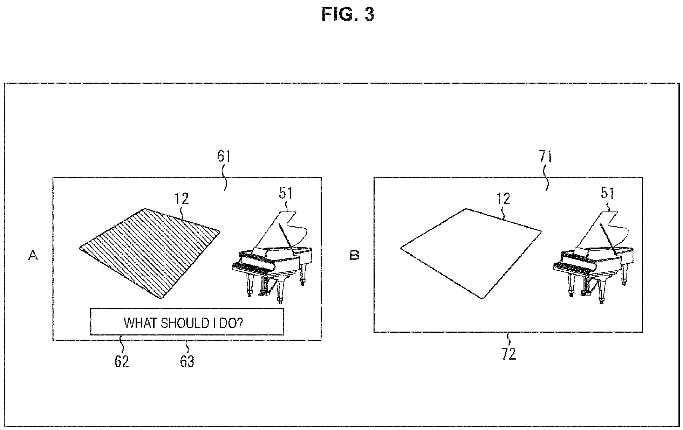

FIG. 3 is a diagram illustrating a first example of state screens.

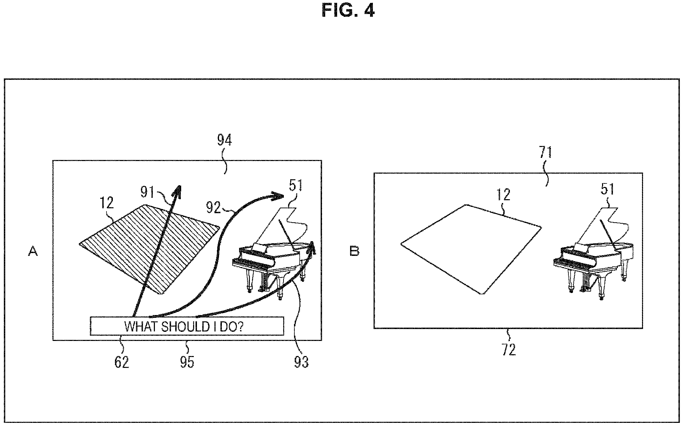

In the example illustrated in FIG. 3, there are a carpet 12 and a piano 51 around the cleaner robot 11. The carpet 12 is an unknown state element, and the piano 51 is a known state element. This is similar to FIG. 4 (to be described later).

In this case, as illustrated in a section A in FIG. 3, the request unit 34 generates an image 61 in which the carpet 12 in the image captured by the state detection unit 32 is emphasized using color or the like as the unknown state element information that indicates the carpet 12 as an unknown state element. In addition, the request unit 34 generates a message 62 as teaching request information. The message 62 such as "What should I do?" prompts the user to teach an action. Next, the request unit 34 generates a state screen 63 including the image 61 and the message 62, and causes the touchscreen 11A to display the state screen 63.

The user sees the image 61 on the state screen 63 and recognizes that the carpet 12 is the unknown state element. Next, the user sees the message 62 and teaches an action with regard to the carpet 12 by operating the touchscreen 11A such as inputting a transfer pathway or the like of the cleaner robot 11 with regard to the carpet 12.

Accordingly, the action model is updated, and the carpet 12 becomes a known state element. Therefore, as illustrated in a section B in FIG. 3, the request unit 34 generates an image 71 captured by the state detection unit 32 as unknown state element information that does not indicate any state element as an unknown state element. In other words, the unknown state element information is updated from the image 61 to the captured image 71. Next, the request unit 34 generates a state screen 72 including the captured image 71, and causes the touchscreen 11A to display the state screen 72.

(Second example of state screens)

FIG. 4 is a diagram illustrating a second example of state screens.

When the carpet 12 is determined to be an unknown state element in the example illustrated in FIG. 4, the request unit 34 generates an image 61 as illustrated in a section A in FIG. 4, and generates an image 94 in which transfer pathways 91 to 93 corresponding to candidate actions are superimposed on the image 61. The image 61 is unknown state element information that indicates the carpet 12 as an unknown state element. In addition, the request unit 34 generates the message 62 as the teaching request information. Next, the request unit 34 generates a state screen 36 including the image 94 and the message 62, and causes the touchscreen 11A to display the state screen 95.

The user sees the image 94 on the state screen 95 and recognizes that the carpet 12 is the unknown state element. Next, the user sees the message 62, operates the touchscreen 11A for selecting a desired transfer pathway from the transfer pathways 91 to 93, and teaches an action corresponding to the selected transfer pathway as an action to be performed with regard to the carpet 12.

Accordingly, the action model is updated, and the carpet 12 becomes a known state element. Therefore, as illustrated in a section B in FIG. 4, the request unit 34 generates a captured image 71 as unknown state element information that does not indicate any state element as an unknown state element. In other words, the unknown state element information is updated from the image 94 to the captured image 71. Next, the request unit 34 generates a state screen 72 including the captured image 71, and causes the touchscreen 11A to display the state screen 72. Note that, in this case, it is also possible to display a transfer pathway selected by the user such that the transfer pathway is superimposed on the state screen 72.

In the case illustrated in FIG. 4, it is possible for the user to teach an action by selecting a desired transfer pathway from the transfer pathways 91 to 93 corresponding to the candidate actions. Therefore, it is possible to reduce a burden on the user in comparison with the case where the user directly inputs an action to be taught as illustrated in FIG. 3. For example, the candidate actions may be a predetermined number of actions extracted from actions having probabilities P(a|s) in descending order. The probabilities P(a|s) are calculated on the basis of the current action model.

Note that, it is also possible for the touchscreen 11A to display a state screen including a message "Do you select this action?" serving as the teaching request information, and an image in which transfer pathways are superimposed on the image 61. The transfer pathways correspond to actions based on action models corresponding to known states that have high similarities to the current ambient state.

In this case, the user operates the touchscreen 11A for inputting "OK" (permission) and teaching an action corresponding to a transfer pathway displayed on the state screen. Therefore, it is possible to reduce a burden on the user in comparison with the case where the user directly inputs an action to be taught as illustrated in FIG. 3. For example, in the case where the user performs operation of inputting "NG" (rejection), the touchscreen 11A displays the state screen 63 illustrated in FIG. 3 or the state screen 95 illustrated in FIG. 4.

As described above, the request unit 34 causes the unknown state element information to be displayed. This enables the user to recognize an unknown state element from the unknown state element information. Therefore, it is possible for the user to teach an action more effectively by teaching an action with regard to the unknown state element. In other words, the unknown state element information functions as user operation assistant information for assisting the user to perform operation of teaching an action.

In addition, the request unit 34 updates the unknown state element information after the action is taught. This enables the user to recognize an effect of the teaching of the action to the action model, that is, the cleaner robot 11's understanding of the teaching of the action.

(Description of initialization process of cleaner robot)

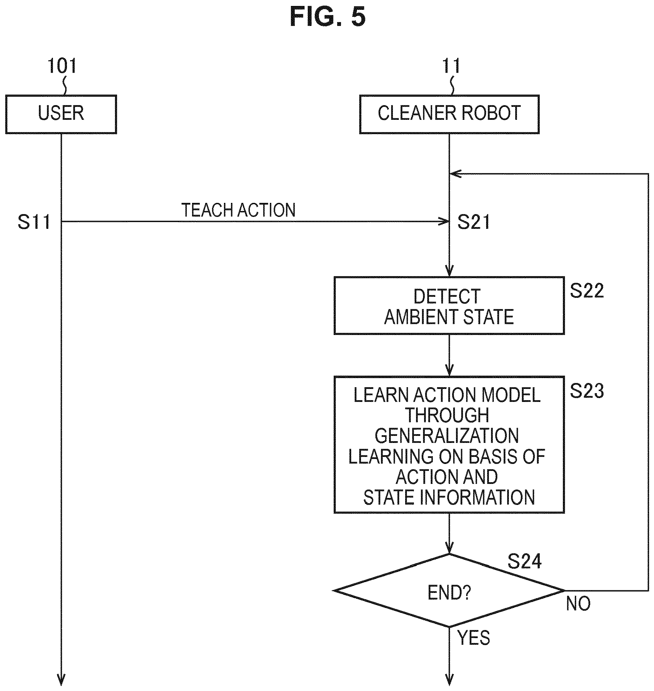

FIG. 5 is a flowchart for describing an initialization process of the cleaner robot 11 illustrated in FIG. 2. For example, this initialization process is started when the user 101 operates the remote controller (not illustrated) or the touchscreen 11A and instructs to start the initialization process.

In Step S11 illustrated in FIG. 5, a user 101 operates the remote controller (not illustrated) and teaches an action corresponding to the current ambient state.

In Step S21, the reception unit 35 of the cleaner robot 11 receives the operation carried out through the process in Step S11, and supplies a remote controller operation signal of the operation to the action control unit 31. On the basis of the remote controller operation signal, the action control unit 31 recognizes an action of the cleaner robot 11, and request the state detection unit 32 to detect the ambient state. The action is taught by the user and the action corresponds to the current ambient state.

In Step S22, the state detection unit 32 detects the ambient state of the cleaner robot 11 in response to the request from the action control unit 31, and supplies state information of the detected state to the action control unit 31.

In Step S23, the action control unit 31 learns an action model through generalization learning on the basis of the recognized action of the cleaner robot 11 and the state information supplied by the state detection unit 32.

In Step S24, the action control unit 31 determines whether to end the initialization process. For example, the action control unit 31 determines not to end the initialization process in Step S24 in the case where a predetermined period of time has not elapsed since the initialization process has started, or in the case where the user 101 has not operated the remote controller or the like for instructing to end the initialization process. Next, the process returns to Step S21, and the process in Step S11 and the processes from Step S21 to Step S24 are repeated until the action control unit 31 determines to end the initialization process in Step S24.

On the other hand, the action control unit 31 determines to end the initialization process in Step S24 in the case where the predetermined period of time has elapsed since the initialization process has started, or in the case where the user 101 has operated the remote controller or the like for instructing to end the initialization process. Next, the action control unit 31 supplies the action model obtained through the generalization learning in Step S23 to the unknown determination unit 33 as the initialized action model, and ends the initialization process.

(Description of first example of action control process of cleaner robot in normal mode)

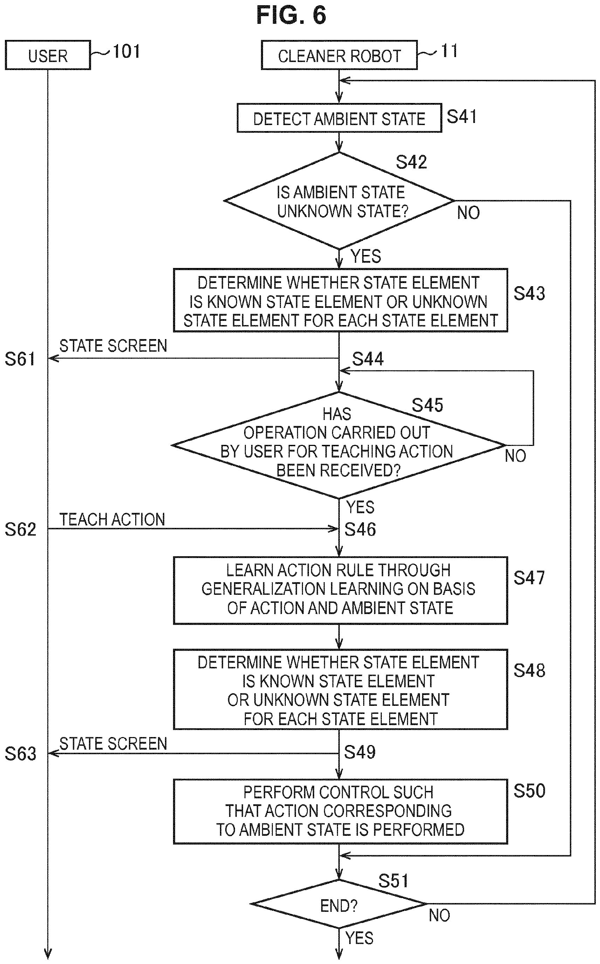

FIG. 6 is a flowchart for describing a first example of an action control process of the cleaner robot 11 in the normal mode. For example, this action control process is started when the user 101 operates the remote controller (not illustrated) or the touchscreen 11A and instructs to start the action control process after the initialization process illustrated in FIG. 5 ends.

In Step S41 illustrated in FIG. 6, the state detection unit 32 of the cleaner robot 11 detects the ambient state of the cleaner robot 11, and supplies state information of the detected state to the unknown determination unit 33.

In Step S42, the unknown determination unit 33 determines whether the ambient state indicated by the state information is an unknown state on the basis of the state information supplied by the state detection unit 32 and the action model supplied by the action control unit 31, and then notifies the action control unit 31 of the determination result.

In the case where the ambient state is determined to be the unknown state in Step S42, the process proceeds to Step S43. In Step S43, the unknown determination unit 33 determines whether a state element is a known state element or an unknown state element on the basis of the action model supplied by the action control unit 31 for each of one or more state elements included in the ambient state indicated by the state information. Next, the unknown determination unit 33 generates unknown state element specification information on the basis of the determination result, and supplies it to the request unit 34 in addition to the state information.

In Step S44, the request unit 34 generates a state screen including unknown state element information and teaching request information on the basis of the state information and the unknown state element specification information, supplies it to the touchscreen 11A, and causes the touchscreen 11A to display it.

In Step S61, the user 101 sees the state screen displayed on the touchscreen 11A through the process in Step S44, and recognizes the unknown state element. In Step S62, the user 101 operates the touchscreen 11A and teaches an action corresponding to the recognized unknown state element.

In Step S45, the touchscreen 11A determines whether the operation carried out by the user 101 in Step S62 for teaching the action has been received. The touchscreen 11A waits for the reception in the case where it is determined that the operation carried out by the user 101 for teaching the action has not been received yet in Step S45.

On the other hand, the process proceeds to Step S46 in the case where it is determined that the operation carried out by the user 101 for teaching the action has been received in Step S45. In Step S46, the touchscreen 11A supplies a touch operation signal of the received operation to the action control unit 31.

In Step S47, the action control unit 31 recognizes the action taught by the user on the basis of the touch operation signal supplied by the touchscreen 11A.

In Step S47, the action control unit 31 learns an action model through generalization learning on the basis of the recognized action and the ambient state detected in Step S41. The action control unit 31 supplies the action model obtained through the generalization learning to the unknown determination unit 33.

In Step S48, the unknown determination unit 33 determines whether a state element is a known state element or an unknown state element on the basis of the action model obtained through the generalization learning in Step S47, for each of one or more state elements included in the ambient state indicated by the state information. Next, the unknown determination unit 33 generates unknown state element specification information on the basis of the determination result, and supplies it to the request unit 34.

In Step S49, the request unit 34 updates the state screen, supplies it to the touchscreen 11A, and causes the touchscreen 11A to display it on the basis of the state information supplied through the process in Step S43 and the unknown state element specification information supplied through the process in Step S48. Accordingly, the touchscreen 11A displays the state screen that does not include unknown state element information or teaching request information in the case where the unknown state element specification information is information that does not specify any state element as an unknown state element. On the other hand, in the case where the unknown state element specification information is information that specifies at least one state element, the touchscreen 11A displays a state screen that includes unknown state element information. After the process in Step S49, the process proceeds to Step S50.

In Step S63, the user 101 sees the state screen displayed on the touchscreen 11A through the process in Step S49, and recognizes the cleaner robot 11's understanding of the teaching of the action given in Step S62.

On the other hand, the process proceeds to Step S50 in the case where the ambient state is determined not to be an unknown state in Step S42, that is, in the case where the ambient state is a known state.

In Step S50, the action control unit 31 decides an action having the highest probability P(a|s) in the ambient state detected in Step S41 on the basis of the action model, as an action corresponding to the state, and controls the cleaner robot 11 such that the cleaner robot 11 performs the decided action.

In Step S51, the cleaner robot 11 determines whether to end the action control process. In the case where it is determined that the action control process does not end in Step S51, the process returns to Step S41 and the cleaner robot 11 waits for determination to end the action control process.

On the other hand, the process ends in the case where it is determined that the action control process ends in Step S51.

(Description of action control process of cleaner robot in proactive mode)

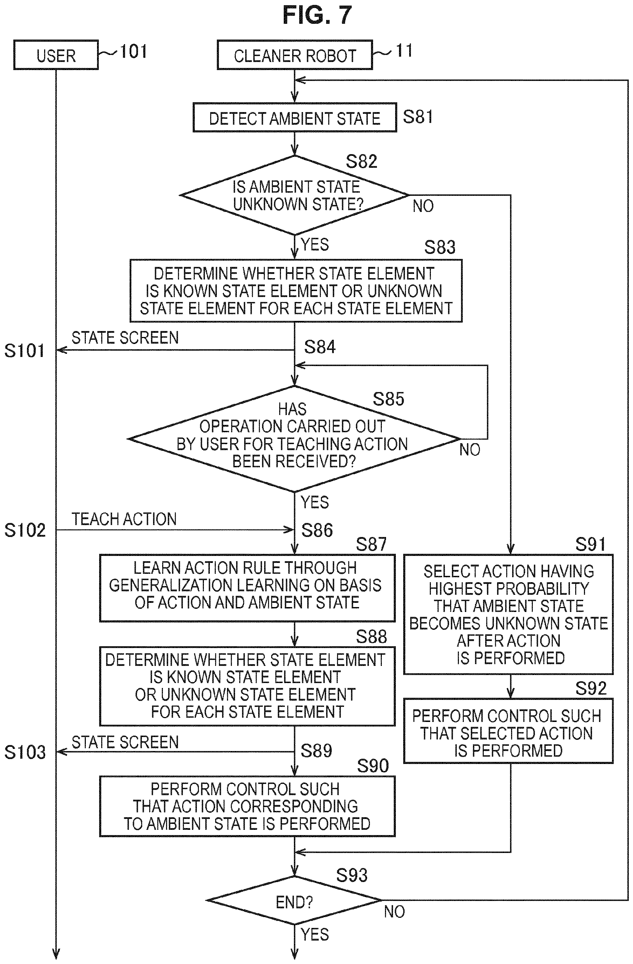

FIG. 7 is a flowchart for describing an action control process of the cleaner robot 11 in the proactive mode. For example, this action control process is started when the user 101 operates the remote controller (not illustrated) or the touchscreen 11A and instructs to start the action control process after the initialization process illustrated in FIG. 5 ends. For example, when the user 101 is in the same room or the same building as the cleaner robot 11, the user 101 operates the touchscreen 11A to select the proactive mode as an action mode. In response to the operation, the action control unit 31 sets the action mode to the proactive mode.

Processes in Step S81 to Step S90 in FIG. 7 are similar to the processes in Step S41 to Step S50 in FIG. 6, and processes in Step S101 to Step S103 in FIG. 7 are similar to the processes in Step S61 to Step S63 in FIG. 6. Therefore description of these steps will be omitted. After the process in Step S90, the process proceeds to Step S93.

The process proceeds to Step S91 in the case where the ambient state is determined not to be an unknown state in Step S82, that is, in the case where the ambient state is a known state.

In Step S91, the action control unit 31 selects an action having the highest probability that the ambient state becomes an unknown state after the action is performed, among actions whose probabilities P(a|s) are more than or equal to a threshold in the current ambient state, on the basis of the state model and the action model. In Step S92, the action control unit 31 controls the cleaner robot 11 such that the cleaner robot 11 performs the selected action, and the process proceeds to Step S93.

In Step S93, the cleaner robot 11 determines whether to end the action control process. In the case where the cleaner robot 11 determines not to end the action control process in Step S93, the process returns to Step S81 and the cleaner robot 11 waits for determination to end the action control process.

On the other hand, the process ends in the case where it is determined that the action control process ends in Step S93.

As described above, in the case where the ambient state is a known state, the cleaner robot 11 in the proactive mode acts such that the ambient state becomes an unknown state after the action is performed and proactively acquires teaching of an action from the user 101. This enables the cleaner robot 11 to quickly learn an action model through the generalization learning.

(Description of action control process of cleaner robot in maintenance mode)

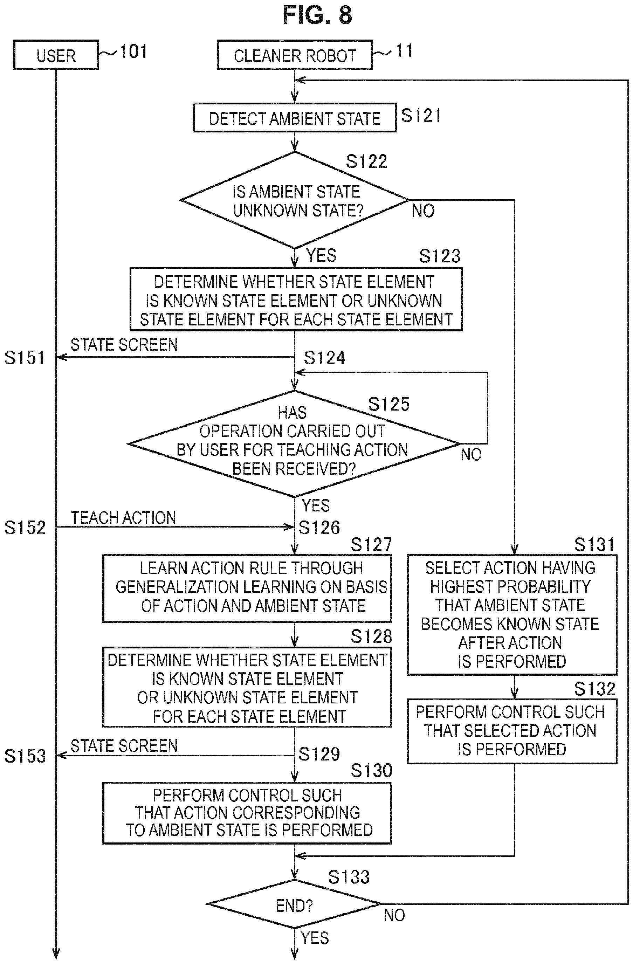

FIG. 8 is a flowchart for describing an action control process of the cleaner robot 11 in the maintenance mode. For example, this action control process is started when the user 101 operates the remote controller (not illustrated) or the touchscreen 11A and instructs to start the action control process after the initialization process illustrated in FIG. 5 ends. For example, when the user 101 is not in the same room or the same building as the cleaner robot 11, the user 101 operates the touchscreen 11A to select the maintenance mode as an action mode. In response to the operation, the action control unit 31 sets the action mode to the maintenance mode.

Processes in Step S121 to Step S130 in FIG. 8 are similar to the processes in Step S41 to Step S50 in FIG. 6, and processes in Step S151 to Step S153 in FIG. 8 are similar to the processes in Step S61 to Step S63 in FIG. 6. Therefore, description of these steps will be omitted. After the process in Step S130, the process proceeds to Step S133.

The process proceeds to Step S131 in the case where the ambient state is determined not to be an unknown state in Step S123, that is, in the case where the ambient state is a known state.

In Step S131, the action control unit 31 selects an action having the highest probability that the ambient state becomes a known state after the action is performed, among actions whose probabilities $P(a|s)$ are more than or equal to a threshold in the current ambient state, on the basis of the state model and the action model. In Step S132, the action control unit 31 controls the cleaner robot 11 such that the cleaner robot 11 performs the selected action, and the process proceeds to Step S133.

In Step S133, the cleaner robot 11 determines whether to end the action control process. In the case where it is determined that the action control process does not end in Step S133, the process returns to Step S121 and the cleaner robot 11 waits for determination to end the action control process.

On the other hand, the process ends in the case where it is determined that the action control process ends in Step S133.

As described above, in the case where the ambient state is a known state, the cleaner robot 11 in the maintenance mode acts such that the ambient state becomes a known state after the action is performed. This enables the cleaner robot 11 to acts more definitely even in the case where the user 101 cannot teach an action.

Note that, in the case where it is determined that operation carried out by the user 101 for teaching an action has not been received in Step S125, the unknown determination unit 33 may record the ambient state detected in Step S121 and end the action control process, or move the process to Step S131. In this case, it is possible for the user 101 to teach an action corresponding to a past ambient state that has been recorded and cause the cleaner robot 11 to learn an action model through the generalization learning when it becomes possible to teach the action.

(Description of second example of action control process of cleaner robot in normal mode)

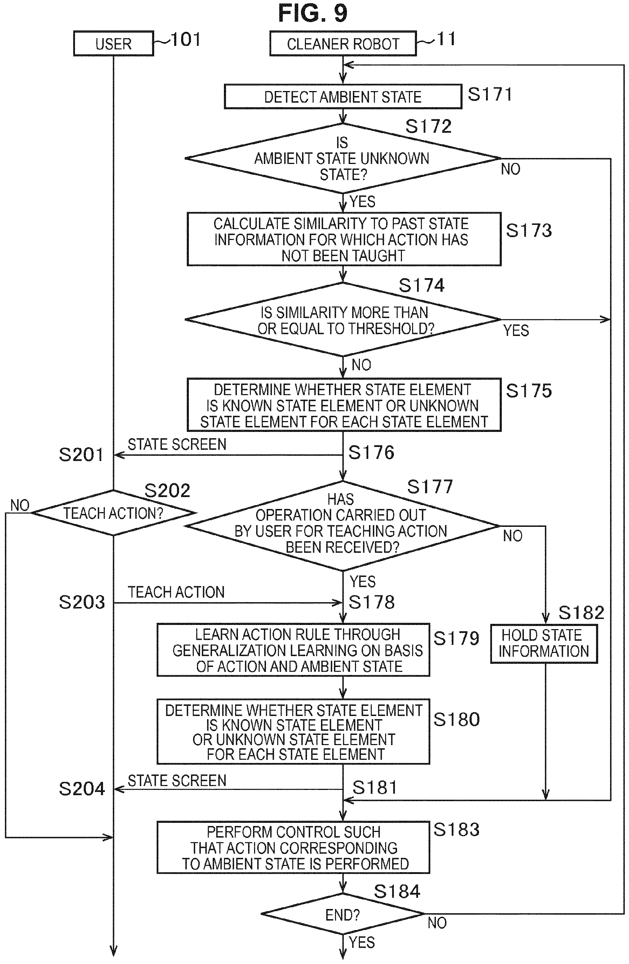

FIG. 9 is a flowchart for describing a second example of the action control process of the cleaner robot 11 in the normal mode. For example, this action control process is started when the user 101 operates the remote controller (not illustrated) or the touchscreen 11A and instructs to start the action control process after the initialization process illustrated in FIG. 5 ends.

Processes in Step S171 to Step S172 illustrated in FIG 9 are similar to the processes in Step S41 to Step S42 illustrated in FIG. 6. Therefore description of these steps will be omitted.

In the case where the ambient state is determined to be an unknown state in Step S172, the process proceeds to Step S173. In Step S173, the unknown determination unit 33 calculates similarity between the state information supplied by the state detection unit 32 and past state information which is hold through the process in Step S182 (to be described later) and for which the user has not taught an action in response to teaching request information.

In Step S174, the unknown determination unit 33 determines whether the similarity calculated in Step S173 is more than or equal to a threshold. In the case where the similarity is determined not to be more than or equal to the threshold in Step S174, the unknown determination unit 33 determines that the state information supplied by the state detection unit 32 is not similar to the past state information for which the user has not taught an action in response to teaching request information. In addition, the unknown determination unit 33 supplies the action control unit 31 with a determination result indicating that the ambient state is an unknown state as the determination result of the process in Step S172, and the process proceeds to Step S175.

Processes in Step S175 to Step S177 are similar to the processes in Step S43 to Step S45 in FIG. 6, and a process in Step S201 is similar to the process in Step S61. Therefore description of these steps will be omitted.

In Step S202, the user 101 determines whether to teach an action with regard to the recognized unknown state element. In Step S203, the user 101 operates the touchscreen 11A and teaches an action corresponding to the recognized unknown state element in the case where the user 101 determines to teach the action corresponding to the unknown state element recognized in Step S202.

In Step S177, the touchscreen 11A determines whether the operation carried out by the user 101 in Step S203 for teaching the action has been received. The process proceeds to Step S178 in the case where it is determined that the operation carried out by the user 101 in Step S203 for teaching the action has been received in Step S177.

Processes in Step S178 to Step S181 are similar to the processes in Step S46 to Step S49 in FIG. 6, and a process in Step S204 is similar to the process in Step S63. Therefore description of these steps will be omitted.

The user 101 ends the process in the case where he/she determines not to teach an action with regard to the unknown state element recognized in Step S202.

In addition, the process proceeds to Step S182 in the case where it is determined that the operation carried out by the user 101 in Step S203 for teaching the action has not been received in Step S177. In Step S182, the unknown determination unit 33 holds the state information supplied by the state detection unit 32 in Step S171, as the past state information for which an action has not been taught. The state information is used for calculating the similarity in the process in Step S173. After the process in Step S182, the process proceeds to Step S183.

On the other hand, the unknown determination unit 33 supplies the action control unit 31 with a determination result indicating that the ambient state is a known state, in the case where the ambient state is determined not to be an unknown state in Step S172, or in the case where the similarity is determined to be more than or equal to the threshold in Step S174. Next, the process proceeds to Step S183.

Processes in Step S183 and Step S184 are similar to the processes in Step S50 and Step S51 illustrated in FIG. 6. Therefore, description of these steps will be omitted.

With regard to action control process in the proactive mode or the maintenance mode, it is also possible to display the state screen on the basis of the similarity to the past state information for which an action has not been taught, in a way similar to the action control process in the normal mode illustrated in FIG. 9.

(Another display method of state screen)

In the above description, the touchscreen 11A displays the state screen 63 (or 72 or 95), whereas the display method of the state screen 63 (or 72 or 95) is not limited thereto.

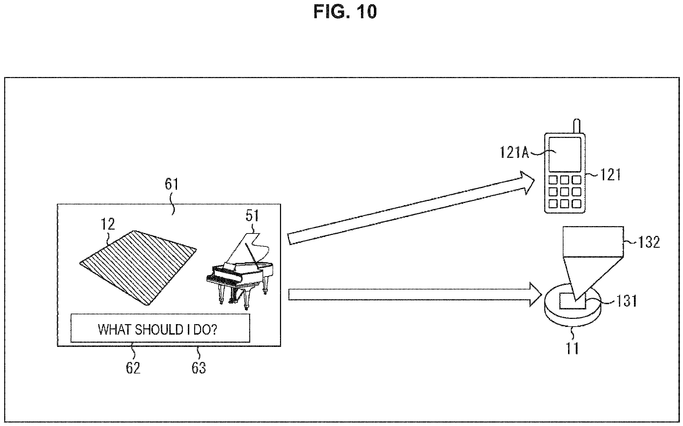

FIG. 10 is a diagram for describing another display method of the state screen.

As illustrated in FIG. 10, the cleaner robot 11 may transmit the state screen 63 (or 72 or 95) to a mobile terminal 121 held by a user, and causes the state screen 63 (or 72 or 95) to be displayed on a display 121A of the mobile terminal 121. In this case, the user operates the mobile terminal 121 to teach an action with regard to the unknown state information, and the mobile terminal 121 transmits a signal indicating the operation to the cleaner robot 11. The cleaner robot 11 learns an action model through the generalization learning by using the signal instead of the touch operation signal. In this case, it is possible for the user to teach the action even when the user is not in the same room or building as the cleaner robot 11.

In addition, the cleaner robot 11 may include a projector 131 instead of the touchscreen 11A and may project the state screen 63 (or 72 or 95) as a projection image 132. In this case, the user operates a remote controller (not illustrated) or the like to teach the action corresponding to the unknown state information, and the cleaner robot 11 learns an action model through the generalization learning by using a remote controller operation signal of the operation instead of the touch operation signal.

In addition, instead of causing the user to set an action mode, the state detection unit 32 may determine whether there is the user around the cleaner robot 11, and the action control unit 31 may set the action mode on the basis of the determination result. In this case, for example, the action control unit 31 sets the action mode to the proactive mode when the state detection unit 32 determines that there is the user around the cleaner robot 11, or the action control unit 31 sets the action mode to the maintenance mode in the case where the state detection unit 32 determines that there is no user around the cleaner robot 11.

<Second embodiment>

(Overview of embodiment of video game console)

FIG. 11 is a diagram illustrating an overview of an embodiment of a video game console serving as an information processing apparatus to which the present disclosure is applied.

The video game console to which the present disclosure is applied uses a predetermined character 141 in a video game as an agent, and causes the agent serving as the character 141 to perform actions such as a battle, escape, and travel in accordance with action models on the basis of an ambient state of the agent in a virtual word of the video game.

For example, as illustrated in FIG. 11, the video game console stops automatically playing the video game when finding an enemy character 142 who is an enemy character of the character 141 and who has never been around the character 141 while automatically playing the video game in the past. Next, the video game console displays teaching request information and unknown state element information indicating the enemy character 142 as an unknown state element.

The user sees the displayed unknown state element information, recognizes that the unknown state element is the enemy character 142, and instructs to battle with the enemy character 142 or escape from the enemy character 142.

The video game console learns an action model through generalization learning on the basis of the action taught by the user. Subsequently, the video game console performs the taught action with regard to the enemy character 142 hereafter.

(Configuration example of video game console)

FIG. 12 is a block diagram illustrating a configuration example of the embodiment of the video game console to which the present disclosure is applied.

Among structural elements illustrated in FIG. 12, structural elements that are the same as the structural elements illustrated in FIG. 2 are denoted with the same reference signs as FIG. 2. Therefore, repeated description will be omitted appropriately.

A video game console 150 illustrated in FIG. 12 includes the unknown determination unit 33, an action control unit 151, a state acquisition unit 152, a request unit 153, a display unit 154, and a reception unit 155.

The action control unit 151 in the video game console 150 initializes an action model for finding a probability P (a|s) that the character 141 performs an action a in a state s (adequacy of the action a of the character 141 in the state s).

Specifically, the action control unit 151 requests the state acquisition unit 152 to acquire state information, and acquires the state information supplied by the state acquisition unit 152 in response to the request. In addition, the action control unit 151 acquires a controller operation signal from the reception unit 155. The controller operation signal indicates operation of a controller (not illustrated) carried out by a user. On the basis of the controller operation signal, the action control unit 151 recognizes an action of the character 141. The action is taught by the user and the action corresponds to the current ambient state of the character 141. Next, the action control unit 151 initializes the action model through the generalization learning of the action model while using the state indicated by the current state information as the state s, and using the action of the character 141 corresponding to the state as the action a. The action control unit 151 supplies the initialized action model to the unknown determination unit 33.

In addition, the action control unit 151 sets an action mode to a proactive mode, a normal mode, or a maintenance mode on the basis of the controller operation signal supplied by the reception unit 155.

In the case where the action mode is set to the proactive mode and the unknown determination unit 33 notifies that the current ambient state is a known state, the action control unit 151 selects an action having the highest probability that the ambient state becomes an unknown state after the action is performed, among actions whose probabilities P(a|s) are more than or equal to a threshold in the current ambient state, on the basis of a state model and the action model. Next, the action control unit 151 performs control such that the character 141 performs the selected action.

Note that, examples of actions of the character 141 include a battle, escape, travel, and the like. In addition, the state model is a model for finding (a predictive value of) a probability P(s'|s,a) that the state s changes to a state s' when the character 141 performs the action a in the state s. Here, it is assumed that the state model is decided in advance. However, the state model may be learned on the basis of state information acquired by the state acquisition unit 152 and the action performed by the action control unit 151.

Alternatively, in the case where the action mode is set to the normal mode and the unknown determination unit 33 notifies that the current ambient state is a known state, the action control unit 151 performs control such that the character 141 performs an action having the highest probability P(a|s) in the current ambient state on the basis of the action model.

Alternatively, in the case where the action mode is set to the maintenance mode and the unknown determination unit 33 notifies that the current ambient state is a known state, the action control unit151 selects an action having the highest probability that the ambient state becomes a known state after the action is performed, among actions whose probabilities P(a|s) are more than or equal to a threshold in the current ambient state, on the basis of the state model and the action model. Next, the action control unit 151 performs control such that the character 141 performs the selected action.

Alternatively, in the case where the unknown determination unit 33 notifies that the current ambient state is a known state regardless of the action mode, the action control unit 151 recognizes an action taught by the user on the basis of a controller operation signal supplied by the reception unit 155. Next, the action control unit 151 learns the action model through the generalization learning on the basis of the recognized action and the current ambient state of the character 141, and supplies the action model obtained through the generalization learning to the unknown determination unit 33. In addition, on the basis of the action model obtained through the generalization learning, the action control unit 151 performs control such that the character 141 performs an action having the highest probability $P(a|s)$ in the current ambient state of the character 141.

In response to the request from the action control unit 151, the state acquisition unit 152 acquires state information and supplies it to the action control unit 151. The state information indicates a position of the character 141 in the virtual word of the video game, positions of enemies of the character 141 in the virtual word of the video game, a status of the character 141, and the like as ambient state. In addition, after the action learning model is initialized, the state acquisition unit 152 starts acquisition of state information of the character 141, and supplies the acquired state information to the unknown determination unit 33.

The request unit 153 generates (updates) unknown state element information on the basis of the state information and unknown state element specification information that are supplied by the unknown determination unit 33. In addition, the request unit 153 generates teaching request information in the case where the unknown state element specification information is information that specifies a certain state element as an unknown state element. Next, the request unit 153 generates a state screen including the unknown state element information, the teaching request information, and the like. For example, the unknown state element information is an image including the character 141 and the ambient state of the character 141, the image displaying unknown state elements such that the unknown state elements are emphasized using color or the like. The request unit 153 supplies the generated state screen to the display unit 154.

The display unit 154 (output unit) displays (outputs) the state screen supplied by the request unit 153.

The reception unit 155 receives operation of a controller (not illustrated) carried out by the user, and supplies a controller operation signal indicating the operation to the action control unit 151. For example, the reception unit 155 receives operation of the controller (not illustrated) carried out by the user for selecting an action mode, and supplies a controller operation signal indicating the operation to the action control unit 151. In addition, the reception unit 155 receives the operation of the controller (not illustrated) carried out by the user for teaching the action, and supplies the controller operation signal indicating the operation to the action control unit 151.

<Third embodiment>

(Overview of embodiment of support robot)

FIG. 13 is a diagram illustrating an overview of an embodiment of a support robot that serves as an information processing apparatus to which the present disclosure is applied.

A configuration of a support robot 170 illustrated in FIG. 13 is similar to the configuration of the cleaner robot 11 illustrated in FIG. 2, except that an action of to be performed by the support robot 170 is an action of giving advice or the like to a child. Therefore, repeated description will be omitted.

In the example illustrated in FIG. 13, for example, the support robot 170 learns an action model through the generalization learning such that the support robot 170 advises a child to go to bed before 10:00 p.m. and study as much as you can. In this case, when the support robot 170 detects "a child who is studying" and "after 10:00 p.m." as an ambient state, the support robot 170 determines this state as an unknown state. Next, the support robot 170 displays a state screen including teaching request information and unknown state element information indicating the "child who is studying" and "after 10:00 p.m." as unknown state elements. Accordingly, a parent who is a user of the support robot 170 teaches an action of the support robot 170.

<Fourth embodiment>

(Description of computer to which present disclosure is applied)

The above-described series of processes may be performed by hardware or may be performed by software. When the series of processes are performed by software, a program forming the software is installed into a computer. Examples of the computer include a computer that is incorporated in dedicated hardware and a general-purpose personal computer that can perform various types of function by installing various types of program.

FIG. 14 is a block diagram illustrating a configuration example of the hardware of a computer that performs the above-described series of processes with a program.

In the computer 200, a central processing unit (CPU) 201, read only memory (ROM) 202, and random access memory (RAM) 203 are mutually connected by a bus 204.

Further, an input/output interface 205 is connected to the bus 204. Connected to the input/output interface 205 are an input unit 206, an output unit 207, a storage unit 208, a communication unit 209, and a drive 210.

The input unit 206 includes a keyboard, a mouse, a microphone, and the like. The output unit 207 includes a display, a speaker array, and the like. The storage unit 208 includes a hard disk, a nonvolatile memory, and the like. The communication unit 209 includes a network interface, and the like. The drive 210 drives a removable medium 211 such as a magnetic disk, an optical disc, a magneto-optical disk, and a semiconductor memory.

In the computer 200 configured as described above, the CPU 201 loads a program that is stored, for example, in the storage unit 208 onto the RAM 203 via the input/output interface 205 and the bus 204, and executes the program, thereby performing the above-described series of processes.

For example, programs to be executed by the computer 200 (CPU 201) can be recorded and provided in the removable medium 211, which is a packaged medium or the like. In addition, programs can be provided via a wired or wireless transmission medium such as a local area network, the Internet, and digital satellite broadcasting.

In the computer 200, by mounting the removable medium 211 onto the drive 210, programs can be installed into the storage unit 208 via the input/output interface 205. Programs can also be received by the communication unit 209 via a wired or wireless transmission medium, and installed into the storage unit 208. In addition, programs can be installed in advance into the ROM 202 or the storage unit 208.

Note that a program executed by the computer 200 may be a program in which processes are chronologically carried out in a time series in the order described herein or may be a program in which processes are carried out in parallel or at necessary timing, such as when the processes are called.

The advantageous effects described herein are not limited, but merely examples. Any other advantageous effects may also be attained.

In addition, embodiments of the present disclosure are not limited to the above-described embodiments, and various alterations may occur insofar as they are within the scope of the present disclosure.

For example, the unknown state element information and the teaching request information may be output by voice or sound.

Further, the present disclosure can adopt a configuration of cloud computing, in which a plurality of devices shares a single function via a network and perform processes in collaboration.

Furthermore, each step in the above-described flowcharts can be executed by a single device or shared and executed by a plurality of devices.

In addition, when a single step includes a plurality of processes, the plurality of processes included in the single step can be executed by a single device or shared and executed by a plurality of devices.

Additionally, the present technology may also be configured as below.

(1) An information processing apparatus including
an output unit configured to output unknown state element information that indicates an unknown state element, and teaching request information that requests teaching of an action corresponding to an ambient state, in a case where the ambient state includes the unknown state element.
(2) The information processing apparatus according to (1), further including
an action control unit configured to learn an action model for finding a probability that the information processing apparatus performs a predetermined action in a predetermined ambient state, on the basis of the ambient state and the action taught by a user in accordance with the teaching request information.
(3) The information processing apparatus according to (2),
in which the action control unit is configured to perform control such that the information processing apparatus performs an action having a highest probability in the ambient state in accordance with the action model.
(4) The information processing apparatus according to (2) or (3), further including
an unknown determination unit configured to determine whether respective state elements included in the ambient state are unknown state elements on the basis of the action model learned by the action control unit,
in which the output unit is configured to update the unknown state element information on the basis of a state element that has been determined to be the unknown state element by the unknown determination unit.
(5) The information processing apparatus according to any one of (1) to (4),
in which the output unit is configured to output the unknown state element information and the teaching request information in a case where the ambient state includes an unknown state element and the ambient state is not similar to a past ambient state for which a user has not taught an action in accordance with the teaching request information.
(6) The information processing apparatus according to (1), further including
an action control unit configured to perform control such that the information processing apparatus performs an action and the ambient state includes an unknown state element after the action is performed, in a case where the ambient state does not include an unknown state element before the action is performed.

(7) The information processing apparatus according to (1), further including

an action control unit configured to perform an action such that the ambient state does not include an unknown state element after the action is performed, in a case where the ambient state does not include an unknown state element before the action is performed.

(8) An information processing method including

an output step in which an information processing apparatus outputs unknown state element information that indicates an unknown state element, and teaching request information that requests teaching of an action corresponding to an ambient state, in a case where the ambient state includes the unknown state element.

Reference Signs List

| 11 | cleaner robot |
| 11A | touchscreen |
| 31 | action control unit |
| 33 | unknown determination unit |
| 61 | image |
| 62 | message |
| 150 | video game console |
| 151 | action control unit |
| 154 | display unit |
| 170 | support robot |

**Claims**

1. An information processing apparatus comprising

   an output unit configured to output unknown state element information that indicates an unknown state element, and teaching request information that requests teaching of an action corresponding to an ambient state, in a case where the ambient state includes the unknown state element.

2. The information processing apparatus according to claim 1, further comprising

   an action control unit configured to learn an action model for finding a probability that the information processing apparatus performs a predetermined action in a predetermined ambient state, on a basis of the ambient state and the action taught by a user in accordance with the teaching request information.

3. The information processing apparatus according to claim 2,

   wherein the action control unit is configured to perform control such that the information processing apparatus performs an action having a highest probability in the ambient state in accordance with the action model.

4. The information processing apparatus according to claim 2, further comprising

   an unknown determination unit configured to determine whether respective state elements included in the ambient state are unknown state elements on a basis of the action model learned by the action control unit,

   wherein the output unit is configured to update the unknown state element information on a basis of a state element that has been determined to be the unknown state element by the unknown determination unit.

5. The information processing apparatus according to claim 1,

   wherein the output unit is configured to output the unknown state element information and the teaching request information in a case where the ambient state includes an unknown state element and the ambient state is not similar to a past ambient state for which a user has not taught an action in accordance with the teaching request information.

6. The information processing apparatus according to claim 1, further comprising

   an action control unit configured to perform control such that the information processing apparatus performs an action and the ambient state includes an unknown state element after the action is performed, in a case where the ambient state does not include an unknown state element before the action is performed.

7. The information processing apparatus according to claim 1, further comprising
an action control unit configured to perform an action such that the ambient state does not include an unknown state element after the action is performed, in a case where the ambient state does not include an unknown state element before the action is performed.

8. An information processing method comprising
an output step in which an information processing apparatus outputs unknown state element information that indicates an unknown state element, and teaching request information that requests teaching of an action corresponding to an ambient state, in a case where the ambient state includes the unknown state element.

# FIG. 1

CLEANER ROBOT FINDS CARPET THAT HAS NEVER EXISTED BEFORE WHILE DOING CLEANING

CLEANER ROBOT STOPS DOING CLEANING AND REQUESTS USER TO TEACH ACTION

USER TEACHES ACTION OF AVOIDING CARPET AND DOING CLEANING, OR ACTION OF CROSSING CARPET AND DOING CLEANING

CLEANER ROBOT PERFORMS TAUGHT ACTION WITH REGARD TO CARPET HEREAFTER

# FIG. 2

FIG. 3

FIG. 4

# FIG. 5

101

USER

11

CLEANER ROBOT

S11 — TEACH ACTION → S21

S22 DETECT AMBIENT STATE

S23 LEARN ACTION MODEL THROUGH GENERALIZATION LEARNING ON BASIS OF ACTION AND STATE INFORMATION

S24 END?

NO

YES

## FIG. 6

| USER | ~101 |
| CLEANER ROBOT | ~11 |

DETECT AMBIENT STATE  S41

S42
IS AMBIENT STATE
UNKNOWN STATE?  NO

YES

DETERMINE WHETHER STATE ELEMENT
IS KNOWN STATE ELEMENT OR UNKNOWN
STATE ELEMENT FOR EACH STATE ELEMENT  S43

S61  STATE SCREEN  S44

S45
HAS
OPERATION CARRIED OUT
BY USER FOR TEACHING ACTION
BEEN RECEIVED?  NO

YES

S62  TEACH ACTION  S46

LEARN ACTION RULE THROUGH
GENERALIZATION LEARNING ON BASIS
OF ACTION AND AMBIENT STATE  S47

DETERMINE WHETHER STATE ELEMENT
IS KNOWN STATE ELEMENT
OR UNKNOWN STATE ELEMENT
FOR EACH STATE ELEMENT  S48

S63  STATE SCREEN  S49

PERFORM CONTROL SUCH
THAT ACTION CORRESPONDING
TO AMBIENT STATE IS PERFORMED  S50

S51
END?  NO

YES

# FIG. 7

USER ~101

CLEANER ROBOT ~11

DETECT AMBIENT STATE S81

S82

IS AMBIENT STATE
UNKNOWN STATE?

NO

YES S83

DETERMINE WHETHER STATE ELEMENT
IS KNOWN STATE ELEMENT OR UNKNOWN
STATE ELEMENT FOR EACH STATE ELEMENT

S101 ◄ STATE SCREEN S84

S85

HAS
OPERATION CARRIED OUT
BY USER FOR TEACHING ACTION
BEEN RECEIVED?

NO

YES

S102 TEACH ACTION S86

S87

LEARN ACTION RULE THROUGH
GENERALIZATION LEARNING ON BASIS
OF ACTION AND AMBIENT STATE

S91

SELECT ACTION HAVING
HIGHEST PROBABILITY
THAT AMBIENT STATE
BECOMES UNKNOWN STATE
AFTER ACTION
IS PERFORMED

S88

DETERMINE WHETHER STATE ELEMENT
IS KNOWN STATE ELEMENT
OR UNKNOWN STATE ELEMENT
FOR EACH STATE ELEMENT

S92

PERFORM CONTROL SUCH
THAT SELECTED ACTION
IS PERFORMED

S103 ◄ STATE SCREEN S89

S90

PERFORM CONTROL SUCH
THAT ACTION CORRESPONDING
TO AMBIENT STATE IS PERFORMED

S93

END?

NO

YES

22

# FIG. 8

USER ~101                CLEANER ROBOT ~11

DETECT AMBIENT STATE  S121

S122

IS AMBIENT STATE
UNKNOWN STATE?        NO

YES        S123

DETERMINE WHETHER STATE ELEMENT
IS KNOWN STATE ELEMENT OR UNKNOWN
STATE ELEMENT FOR EACH STATE ELEMENT

S151 ← STATE SCREEN

S124

S125

HAS
OPERATION CARRIED OUT
BY USER FOR TEACHING ACTION
BEEN RECEIVED?        NO

YES

S152    TEACH ACTION        S126

S127                                S131

LEARN ACTION RULE THROUGH
GENERALIZATION LEARNING ON BASIS
OF ACTION AND AMBIENT STATE

SELECT ACTION HAVING
HIGHEST PROBABILITY
THAT AMBIENT STATE
BECOMES KNOWN STATE
AFTER ACTION
IS PERFORMED

S128

DETERMINE WHETHER STATE ELEMENT
IS KNOWN STATE ELEMENT
OR UNKNOWN STATE ELEMENT
FOR EACH STATE ELEMENT

S132

PERFORM CONTROL SUCH
THAT SELECTED ACTION
IS PERFORMED

S153 ← STATE SCREEN

S129

S130

PERFORM CONTROL SUCH
THAT ACTION CORRESPONDING
TO AMBIENT STATE IS PERFORMED

S133

END?        NO

YES

# FIG. 9

USER ~101    CLEANER ROBOT ~11

DETECT AMBIENT STATE — S171

S172
IS AMBIENT STATE UNKNOWN STATE? — NO

↓YES

CALCULATE SIMILARITY TO PAST STATE INFORMATION FOR WHICH ACTION HAS NOT BEEN TAUGHT — S173

S174
IS SIMILARITY MORE THAN OR EQUAL TO THRESHOLD? — YES

↓NO

DETERMINE WHETHER STATE ELEMENT IS KNOWN STATE ELEMENT OR UNKNOWN STATE ELEMENT FOR EACH STATE ELEMENT — S175

S201 ← STATE SCREEN — S176

S202
NO — TEACH ACTION?

S177
HAS OPERATION CARRIED OUT BY USER FOR TEACHING ACTION BEEN RECEIVED? — NO

YES

S203 — TEACH ACTION → S178    S182
HOLD STATE INFORMATION

LEARN ACTION RULE THROUGH GENERALIZATION LEARNING ON BASIS OF ACTION AND AMBIENT STATE — S179

DETERMINE WHETHER STATE ELEMENT IS KNOWN STATE ELEMENT OR UNKNOWN STATE ELEMENT FOR EACH STATE ELEMENT — S180

S204 ← STATE SCREEN — S181

PERFORM CONTROL SUCH THAT ACTION CORRESPONDING TO AMBIENT STATE IS PERFORMED — S183

S184
END? — NO

↓YES

**FIG. 10**

WHAT SHOULD I DO?

## FIG. 11

141

142

VIDEO GAME CONSOLE FINDS
ENEMY CHARACTER
WHO HAS NEVER EXISTED
BEFORE WHILE AUTOMATICALLY
PLAYING VIDEO GAME

VIDEO GAME
CONSOLE STOPS
AUTOMATICALLY
PLAYING VIDEO GAME
AND REQUESTS USER
TO TEACH ACTION

USER TEACHES ACTION
WITH REGARD TO
ENEMY CHARACTER

VIDEO GAME CONSOLE
PERFORMS TAUGHT ACTION
WITH REGARD TO
ENEMY CHARACTER HEREAFTER

# FIG. 12

152
STATE
ACQUISITION UNIT

151
ACTION
CONTROL UNIT

155
RECEPTION
UNIT

33
UNKNOWN
DETERMINATION
UNIT

153
REQUEST UNIT

154
DISPLAY UNIT

150

# FIG. 13

# FIG. 14

## INTERNATIONAL SEARCH REPORT

| International application No. |
| --- |
| PCT/JP2018/000013 |

A. CLASSIFICATION OF SUBJECT MATTER
Int.Cl. G06N99/00(2010.01)i, A47L9/28(2006.01)i, B25J9/22(2006.01)i

According to International Patent Classification (IPC) or to both national classification and IPC

B. FIELDS SEARCHED

Minimum documentation searched (classification system followed by classification symbols)
Int.Cl. G06N99/00, A47L9/28, B25J9/22

Documentation searched other than minimum documentation to the extent that such documents are included in the fields searched
Published examined utility model applications of Japan        1922-1996
Published unexamined utility model applications of Japan      1971-2018
Registered utility model specifications of Japan              1996-2018
Published registered utility model applications of Japan      1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 11-149315 A (MITSUBISHI HEAVY INDUSTRIES, LTD.) 02 June 1999, paragraphs [0018], [0025]-[0028], [0036]-[0041], [0107], [0108], 1-4, 11 (Family: none) | 1, 8<br>2-4, 6-7<br>5 |
| Y<br>A | JP 2001-166803 A (NIPPON TELEGRAPH AND TELEPHONE) 22 June 2001, paragraphs [0017]-[0019], [0036]-[0056], [0070]-[0078], [0091]-[0098], 1, 5, 7-10 (Family: none) | 2-4<br>5 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16.03.2018 | 27.03.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2018/000013

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2013-58059 A (SONY CORPORATION) 28 March 2013, paragraphs [0248]-[0269], [0322]-[0324], fig. 7-9 & US 2013/0066816 A1, paragraphs [0253]-[0274], [0325], [0327], fig. 7-9 | 6-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRIAN D. ZIEBART ; ANDREW MAAS ; J. ANDREW BAGNELL ; ANIND K. DEY.** Maximum Entropy Inverse Reinforcement Learning. Association for the Advancement of Artificial Intelligence (AAAI), 13 July 2008